# EUROPEAN PATENT APPLICATION

(11) **EP 4 011 851 A1**
(43) Date of publication of application: **15.06.2022**
(21) Application number: 20290080.9
(22) Date of filing: 11.12.2020
(51) Int. Cl.: C04B 28/14

(54) **ACTIVATED SUPER SULPHATED CEMENT**

(71) Applicant: Holcim Technology Ltd, 5113 Holderbank (CH)
(72) Inventor: Guillon, Emmanuel, 38291 St Quentin Fallavier (FR); Sery, Cedric, 38291 St Quentin Fallavier (FR)
(74) Representative: HGF

(57) **Abstract**

The invention relates to a composition for activating a super sulfated cement (SSSC), the composition comprising calcium sulfoaluminate (CSA) and/or calcium aluminate (CA) and calcium hydroxide (CH). Furthermore, the invention also relates to a super sulfated cement comprising blast furnace slag, a calcium sulfate component and the composition for activating the super sulfated cement and concrete made from the super sulfated cement and predetermined aggregates.

## Description

The invention relates to a composition for activating super sulfated cement, the activated super sulfated cement and to a concrete made from the super sulfated cement.

Definitions:
Percentages given below are wt.% except if otherwise indicated.
CSA refers to calcium sulfoaluminate
CA refers to calcium aluminate
CH refers to calcium hydroxide

Activated super sulfated cement or super sulfated slag cement (both terms are commonly used) has been well known for a very long time. For the sake of consistency the term super sulfated cement is used below.

Nowadays, activated super sulfated cements are becoming more and more attractive, as they have a comparable low carbon footprint. Super sulfated cement, its composition, specifications and conformity criteria are standardised in EN15743.

The standard itself makes reference to the standard EN196-1 to 9 relating to methods of testing cement and to EN197-1 relating to composition, specification and confirmative criteria for common cement.

According to standard EN15743, supersulfated cement is a hydraulic binder, i.e. finely ground inorganic material which, when mixed with water, forms a paste which sets and hardens by means of hydration reactions and processes. After hardening, supersulfated cement retains its strength and stability even under water.

Supersulfated cement consists mainly of granulated blast furnace slag and calcium sulfate. Their statistically homogenous composition results from quality assured production and material handling processes. In supersulfated cement, in contrast to common cement according to EN197-1, ground granulated blast furnace slag is mainly activated by calcium sulfate. In order to accelerate the activation and early hydration of slag, additional constituents may be added.

Granulated blast furnace slag is made by rapid cooling of a slag melt of suitable composition as obtained by smelting iron ore in a blast furnace. Granulated blast furnace slag consists of at least 2/3 by mass of glassy slag and possesses hydraulic properties when suitably activated.

Granulated blast furnace slag may consist of at least 66 wt. % of a combination of calcium oxide (CaO), magnesium oxide (MgO) and silicon dioxide (SiO₂). The remainder contains aluminium oxide (Al₂O₃), together with small amounts of other compounds. The ratio by mass (CaO + MgO) /(SiO₂) may exceed 1.0.

Calcium sulfates exist in different modifications, such as gypsum, calcium sulfate dihydrate (CaSO₄ · 2H₂O), hemihydrate (CaSO₄ · ½ H₂O), or anhydrite (anhydrous calcium sulfate, CaSO₄) or any mixture thereof. Gypsum and anhydrite are found naturally, calcium sulfates are also available as a by-product of certain industrial processes.

As additional constituents in the super sulfated cement, especially for activating the super sulfated cement, portland cement clinker can be present. Portland cement clinker is a hydraulic material which may comprise at least 2/3 by mass of calcium silicates (3CaO · SiO₂) and (2CaO · SiO₂). The remainder of Portland cement clinker may comprise aluminium and iron containing clinker phases and other compounds. The weight ratio of (CaO) / (SiO₂) may be not less than 2.0. The content of magnesium oxide (MgO) may not exceed 5,0 wt.% .

"Hydration mechanisms of super sulphated slag cement", A. Gruskovnjak et. al., in "Cement and Concrete Research 38" (2008), p. 983 - 992) describes hydration and strength evolution of super sulfated cements produced by the activation of two different ground granulated blast furnace slags with anhydrite and small amounts of alkaline activator. It was found that there is an "advancement" of the amount of hydrates of a slag with low reactivity by adding aluminium sulfate and calcium hydroxide, which increased the amount of ettringite. Nevertheless, the early compressive strength was not increased but late strength showed a slow increase. It is concluded that the early compressive strength of a supersulfated cement (SSC) using low reactive slag cannot be overcome by adding stoichiometric amounts of constituents which are used for the formation of a specific hydration product.

AU 200168775 A1 describes a hydraulic binder containing a glassy bulky slag milled to a fineness of above 5000 cm²/g Blaine. The latently hydraulic blast furnace slag has a glassiness above 93 %, contains 34 % to 40 % SiO₂, 34 % to 37 % CaO and above 9% and preferably below 13% Al₂O₃. The (CaO + MgO) / (Al₂O₃ + SiO₂) weight ratio should range from 0,88 - 0,98. The binder contains 0,5 - 5 % Portland cement clinker or Portland cement. In this document, the activation of the slag is affected by additional mixing or milling natural calcium sulfate (natural gypsum), flue gas desulfurized gypsum (or its anhydrite) in an amount of 12% to 20% by weight, Portland cement in an amount of 0,5% to 5 % by weight and/or other calcium oxides like hot dust, burnt lime or Ca(OH)₂ in an amount of 0,5% to 3 % by weight, alkali sulfates or alkali carbonates in amounts up to 3 % by weight and/or calcium salts of carboxylic acids in amounts of 0,5% to 3% by weight with the slag. However, the use of hot dust obtained from flue or kiln gases is preferred.

US 6,409,819 B1 describes an activated supersulfated aluminosilicate binder containing alumosilicates, calcium sulfate and an activator containing alkali metal salts, wherein the alumosilicates are selected from the group consisting of blast furnace slag, clay, marl and industrial by-products such as fly ash with the proviso that the Al₂O₃ content is greater than 5% by weight. Blast furnace slag is present in an amount exceeding 35% by weight and clay, marl and/or fly ash is present in an amount exceeding 5% by weight. Cement kiln dust in an amount from 3 to 10% by weight is added to the mixture as an activator and calcium sulfate is used in an amount exceeding 5% by weight.

One problem of application of the super sulfated cements is that the short-term compressive strength which is determined on normalised mortar according to EN 196-1 is very low in the short term, generally below 3 MPa according to EN 196-1 conditions at one day. For example, in EN 15743, in table 2 on page 10, pertaining to mechanical and physical requirements given as characteristic values, the early strength for sulfated slag cements in the strength class of 32,5 R to 42,5 R after two days is not mentioned at all. The early strength is only given for a strength after a minimum of seven days.

Therefore, it is an object of the present invention to provide a composition for activating a super sulfated cement (SSC) which leads to improved short term and long term strength of the cement.

The object is achieved by way of a composition with the features of claim 1.

Further improvements and advantageous embodiments are claimed in the claims which are dependent from claim 1.

It is a further object of the invention to provide a super sulfated cement (SSSC) with the activator resulting in an increased short- and long-term compressive strength.

The object is achieved by way of the features of claim 8, advantageous embodiments are claimed in the claims which are dependent from claim 8.

It is a further object of the invention to provide a concrete made with said super sulfated cement.

This object is achieved by the features of claim 14.

According to the invention and contrary to the prior art, a super sulfated cement (SSC) is not activated by the use of Portland cement or by alkaline activation (e.g. with salt) but with a composition comprising CSA and/or CA and CH, i.e. with calcium sulfoaluminate and/or calcium aluminate together with hydrated lime.

CSA may be calcium-sulfoaluminate-cement.

CA may be calcium-aluminate-cement.

Calcium sulfoaluminate cements are hydraulic binders made from limestone, bauxite and gypsum.

Calcium aluminate cements are cements comprising predominantly hydraulic calcium aluminates. Alternative names are "aluminous cement", "high-alumina cement" and "ciment fondu" in French.

The activator composition substitutes a standard activator - which is i.e. CEM I or a CEM III with 40 to 95 wt. % Portland clinker- with an amount of 0.7 wt.-% to 5 wt.-%.

Surprisingly, it was found that an activator comprising of CSA and/or CA, in particular of calcium sulfoaluminate cements or calcium aluminate cements together with calcium hydroxide, activates the super sulfated cement in a manner which could not have been foreseen from the effects of the single components i.e. calcium sulfoaluminate cement or calcium aluminate cement or calcium hydroxide.

It is known that calcium sulfoaluminate cements or calcium aluminate cements can have very quick strength kinetics and that they have a positive effect on early age strength development due to their hydration products.

Therefore, an increase in strength at day 1 was expected to be observed due to the reaction of CSA or CA. In addition, this increase would likely be linearly proportional to the CSA or CA content as the more CSA or CA take part in the reaction, the higher the amount of ettringite would be to precipitate and fill porosity. It was expected that the impact at later stages of hydration would be neutral or negative. Surprisingly it was found that even the impact at longer ages is higher in comparison to the standard activation.

Surprisingly the optimal strength was obtained after one day with 2% of a mixture of CSA and CA with CH. After seven days, the optimal strength was obtained with only 1% of the mixture of CSA and/or CA with CH.

As previously mentioned, the effect of the inventive activator composition is that the achievable increase in strength, at least at early stages, is remarkably higher than the strength which can be expected by the hydration products of the single components in a mixture with slag and a sulfate component. This leads to the conclusion that besides hydration of the activator components there is an impact on the hydration of the slag which is responsible for the increased strength. With other words, the increase of strength is not caused by known hydration products of CSA (ettringite) or CA (calcium-aluminate-hydrate) but by the stimulation of the hydration of the slag.

In comparison with optimally activated systems according to the prior art, the compressive strength both at one and seven days has strongly increased which means that the hydration of the slag must also have been increased. This leads to a more efficient activation of the slag by the present invention. It was found that these results can be reproduced with a wide range of blast furnace slags and with different types and contents of calcium sulfate provided it is a hydrate, hemihydrate, gypsum or any combination thereof.

It is advantageous that the strength at early ages and after 28 days has remarkably increased compared to the known activation solutions of the prior art. With a W/C of 0.5 even a higher strength class is achievable.

The optimal ratio of CSA and or CA to calcium hydroxide is a weight ratio of 3 to 0.8, preferentially from 3 to 1. With other aluminates the ratio can be different. For example for C₁₂A₇ it should be close to 1 to 1. It was found that calcium aluminate alone without the addition of calcium sulfate and calcium sulfoaluminate does not give the same performance as the invention.

Accordingly a first aspect of the invention relates to a composition for activating a super sulfated cement (SSC), the composition comprising calcium sulfoaluminate (CSA) and/or calcium aluminate (CA) and calcium hydroxide (CH).

In embodiments, the composition comprises 65 wt.% to 85 wt.% CSA and/or CA and 15 wt.% to 35 wt.% CH, preferably 70 wt.% to 80 wt.% CSA and/or CA and 20 wt.% to 30 wt.% CH.

In embodiments, the ratio of CSA and/or CA to CH is a weight ratio of 3 to 1.

In embodiments, CA may be partly substituted by calcium sulfate.

In embodiments, the amount of CSA may be from 5 wt.% to 95 wt.% and the amount of CA may be from 95 wt.% to 5 wt.% based on the total amount of CSA and CA in the composition.

Further CSA may be calcium-sulfoaluminate-cement.

Further CA may be calcium-aluminate-cement.

In embodiments, CH may be slaked lime.

A second aspect of the invention relates to a super sulfated cement comprising blast furnace slag, a calcium sulfate component and the aforementioned composition for activating the super sulfated cement.

In embodiments, the super sulfated cement may comprise at least 79 wt.% of blast furnace slag, preferably at least 85 wt.% and more preferred at least 88 wt.%.

Preferably, the super sulfated cement may comprise a calcium sulfate component in an amount of 6 wt.% to 20 wt.%, preferably 8 wt.% to 16 wt.% and even more preferred 10 wt.% to 14 wt.%.

The calcium sulfate component may be gypsum (calcium sulfate dihydrate CaSO₄ · 2H₂O), hemihydrate (calcium sulfate hemihydrate CaSO₄ · ½ H₂O), or anhydrite (anhydrous calcium sulfate, CaSO₄) or any mixture thereof.

The composition for activating the super sulfated cement may be present in an amount of 1 wt.% to 5 wt.-%.

The composition for activating the super sulfated cement may be present in an amount of 1 wt.% to 3 wt.-%.

The composition for activating the super sulfated cement may be present in an amount of 1 wt.% to 2 wt.-%.

The composition for activating the super sulfated cement may be present in an amount of 2 wt.-%.

In embodiments, a setting retardant may be present.

A third aspect of the invention relates to a concrete made from the aforesaid super sulfated cement and predetermined aggregates.

A fourth aspect of the invention pertains to the use of the concrete for precasted concrete parts, construction of buildings, civil engineering, tunnels, or submarine applications.

The invention is explained by means of different embodiments and accompanying drawings showing:

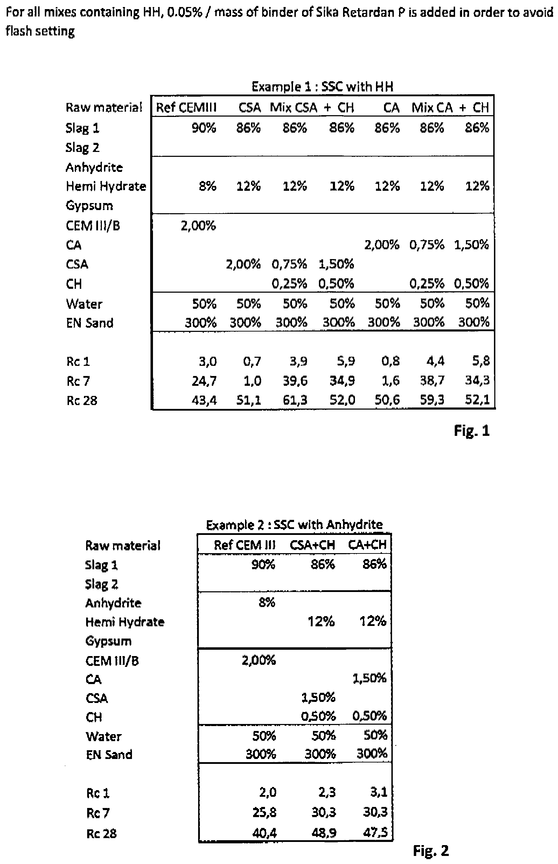

- Figure 1:: a table showing different inventive mixtures of a first slag with hemihydrate and an activator composition according to the invention in relation to a common blast furnace cement CEM III, and the respective compression strength after one, seven and 28 days;
- Figure 2:: a table showing a first slag with hemihydrate and activated with CH and CAC or CSA according to the invention, in relation to a known mixture with CEM III and anhydrite;

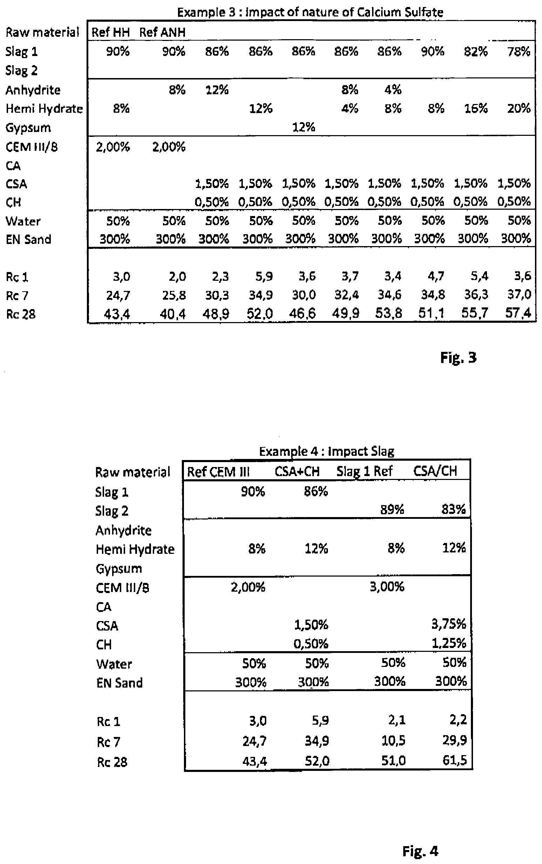

- Figure 3:: a table showing the impact of the nature of calcium sulfate on inventive mixtures;
- Figure 4:: a table showing the impact of the slag.

According to the invention, instead of activating super sulfated cement with Portland cement or alkaline activation, the super sulfated cement is activated by a CSA or CA or a composition of both and CH.

Together with these activating constituents, calcium sulfate as anhydrite, hemihydrate or gypsum may be present. The slag in the super sulfated cement is therefore activated by the composition of the calcium sulfate carrier as well as by the activating composition of CSA and/or CA and CH.

In table 1, in the first column from the left, a super sulfated cement which is activated by a composition of hemihydrate and CEM III / B is shown as a reference. In relation hereto, a composition with CSA without any calcium hydroxide is shown. Further, a composition of CSA and CH in different amounts is mentioned as well as a composition comprising only CA and a composition with CA and CH.

Super sulfated cement activated according to the state of the art with a CEM III / B cement appears to have a short term compressive strength after day one of 3 MPa, wherein the long term compressive strength after 28 days is 43.4 MPa.

In comparison, a composition in which the CEM III is substituted by CSA leads to a short term compressive strength of 0.7 MPa but to a long term compressive strength which is significantly higher than the one of a composition activated by CEM III. The compressive strength after seven days is significantly improved over the compressive strength of the reference example.

Super sulphated slag cement activation with CA substituting CEM III of the prior art exhibits a short term compressive strength after one day similar to the one with CSA (i.e. remarkably low) and almost the same after seven days and 28 days.

An inventive activation of columns 3, 4, 6 and 7 of table 1 shows that by substituting the CEM III / 8 by a composition of 0.75% CSA and 0.25% CH leads to compressive strengths at any stage which are higher than the compressive strength of the reference. The compressive strength can be even higher when the CSA content and the CH content are doubled to 2% in total.

The composition with CA and CH behaves in a comparable manner so that the strength values of a composition with 0.75% CA and 0.25% CH come close to the determined compressive strengths of the CSA / CH composition with 0.75% and 0.25%. The same appears to be true for a composition in which the said constituents are doubled to 1.5% and 0.5%.

In comparison to the sole addition of CAS or the sole addition of CA, it is obvious that a composition comprising of CSA and CH or CA and CH shows a massive synergistic effect between these respective two constituents.

In these examples, hemihydrate was used as a sulfate carrier.

It can be seen from table 2, example 2, that the substitution of hemihydrate with anhydrites leads to a lowered compressive strength at all stages.

In table 3, the impact of the nature of the calcium sulfate is shown. Compositions in this table are known compositions activated using CEM III / B and hemihydrate (column 1) and anhydrite (column 2) in an amount of 8%.

As it is apparent from examples 1 and 2, the use of anhydrites lowers the short term and long term compressive strength but leaves the compressive strength after seven days in the same range as the compositions using hemihydrate.

Upon activation with a composition of CSA in an amount of 1.5% and CH in an amount of 0.5%, the substitution of the calcium sulfate carrier has an impact on the achievable compressive strength.

The short term compressive strength is best when using hemihydrate. Using anhydrite leads to relatively low early compressive strength after one day. The use of gypsum leads to an early compressive strength which is higher than the compressive strength of a known activated product regarding a short term compressive strength after one day, but also after seven and 28 days. After 28 days the composition with hemihydrate shows the highest compressive strength.

In further examples, the anhydrite is partly substituted with hemihydrate (in a weight ratio 2:1) with an activating composition comprising an amount of 1.50% CSA and 0.50% CH. It can be seen that the compressive strength values of the composition in which anhydrite is substituted are between those of a pure anhydrite composition and the pure hemihydrate composition.

Substitution of another 4% of the anhydrite with the hemihydrate (weight ratio 1:2) so that the content of hemihydrate is 8% and that of anhydrite is 4%, leads to compressive strength which in the early stage is a little bit lower than that that with a content of hemihydrate only but is nearly the same after seven days and is a bit higher after 28 days.

Further, to show the influence of the amount of hemihydrate its content was raised from a range of 8% to 16% up to 20% while keeping the CSA and CH amounts at the same level of 1,50% and 0,50%. As shown, the compressive strength with 8% hemihydrate is in the early stage lower, after seven and 28 days more or less the same. By raising the hemihydrate content over 12% to 16%, the early stage compressive strength increases after one day and is close to the compressive strength of the composition with 12% hemihydrate. However, it leads to a higher compressive strength after seven and 28 days.

The compressive strength after seven and 28 days can even be further increased with a composition containing 20% hemihydrate but this results in an early stage compressive strength after one day.

Therefore, it seems that keeping the hemihydrate content between 6% and 20%, preferably between 8% to 14% leads to a maximum in the available compressive strength over the period from one day to 28 days, while up to 4% anhydrite may be present.

In table 4, the impact of the slag is shown.

Two references with 90% blast furnace slag 1 and 89% blast furnace slag 2 respectively, as well as 8% hemihydrate and 2% and 3% CEM III / B are shown. The composition with 3% CEM III / B and slag 2 exhibits a lower compressive strength after one day and a remarkably lower strength after seven days. The compressive strength after 28 days is higher.

A composition according to the invention with 86% slag 1, 12% hemihydrate and the activating composition with 1.50% CSA and 0.50% CH, displays a remarkable compressive strength after one day, after seven days and even after 28 days in regard to the reference.

In a second example slag 2 is used. The amount of slag 2 in the invention is 83% and the amount of hemihydrate is raised to 12% as well as the amount of CSA to 3.75 % and CH to 1.25 %. In comparison to the reference activated with CEM III/B the mid term and long term compressive strength is remarkably higher. In the reference example a higher amount of CEM III/B (3%) is required for sufficient activation.

The results show that the activation according to the invention leads to improved compressive strengths. The results further show that the composition according to the invention improves the hydration of the slag.

In comparison to known activation solutions, an increased strength at early stages and at 28 days is achievable. Moreover, with W/C 0.5 even a higher strength class is achievable with the activation according the invention in comparison to a known activation.

The inventors found that the optimal weight ratio of CSA/CA to calcium hydroxide is 3 to 1, wherein for the calcium sulfate the amounts of anhydrite or hemihydrates should be 6% to 20%, preferably 8% to 16% and even more preferably around 12%.

All binders mentioned in the tables were mixed with water W/B 0.5 wherein 450g binder, 225g water and 1350g EN sand were mixed as defined in EN 196-1.

According to the invention, an activator comprising 75% CSA or (CA + gypsum) and 25 % CH is preferably present in the SSC composition in an amount of 1 to 5%.

According to the invention, the SSC composition comprises at least 79 % slag, and from 6% to 20%, preferably 8% to 16% and even more preferably around 12% calcium sulfate.

If hemihydrate is used as calcium sulfate, the inventive composition may further comprise up to 0.05% Retardan 2000P as a setting retardant to avoid flash setting.

## Claims

1. A composition for activating a super sulfated cement (SSC), the composition comprising calcium sulfoaluminate (CSA) and/or calcium aluminate (CA) and calcium hydroxide (CH).

2. The composition of claim 1, wherein the composition comprises 65 wt.% to 85 wt.% CSA and/or CA and 15 wt.% to 35 wt.% CH, preferably 70 wt.% to 80 wt.% CSA and/or CA and 20 wt.% to 30wt% CH and more preferred 75 wt.% CSA and/or CA and 25% CH.

3. The composition of claim 1 or 2, wherein CA is partially substituted by calcium sulfate.

4. The composition of any one of the preceding claims, wherein when CSA and CA are both present in the composition the amount of CSA is from 5 wt.% to 95 wt.% and the amount of CA is from 95 wt.% to 5 wt.% based on the total amount of CSA and CA in the composition.

5. The composition of any one of the preceding claims, wherein CSA comprises calcium-sulfoaluminate-cement.

6. The composition of any one of the preceding claims, wherein CA comprises calcium-aluminate-cement.

7. The composition of any one of the preceding claims, wherein CH comprises slaked lime.

8. A super sulfated cement comprising blast furnace slag, a calcium sulfate component and the composition for activating the super sulfated cement of any one of the preceding claims.

9. The super sulfated cement of claim 8, wherein the super sulfated cement comprises the blast furnace slag in an amount of at least 79 wt.%, preferably at least 85 wt.% more preferred at least 88 w-%.

10. The super sulfated cement of claim 8 or 9, wherein the super sulphated slag cement comprises the calcium sulfate component in an amount of 6 wt.% to 20 wt.%, preferably 8 wt.% to 16 wt.% and even more preferred 10 wt.% to 14 wt.%.

11. The super sulfated cement of any one of claims 8 to 10, wherein the calcium sulfate component is gypsum (calcium sulfate dihydrate CaSO₄ · 2H₂O), hemihydrate (calcium sulfate hemihydrate CaSO₄ · ½ H₂O), anhydrite (anhydrous calcium sulfate, CaSO₄) or any mixture thereof.

12. The super sulfated cement of any one of the claims 8 to 11, wherein the super sulphated slag cement comprises the composition for activating a super sulfated cement of any one of the claims 1 to 8 in an amount of 1 wt.% to 5 wt.%.

13. The super sulfated cement of any one of the claims 8 to 12, wherein the super sulphated slag cement further comprises a setting retardant.

14. A concrete comprising the super sulfated cement of any one of claims 9 to 13 and predetermined aggregates.

15. The use of the concrete of claim 14 for precasted concrete parts, construction of buildings, civil engineering, tunnels, submarine applications.
